# EUROPEAN PATENT SPECIFICATION

(11) **EP 2 154 190 B1**
(45) Date of publication and mention of the grant of the patent: **29.06.2011**
(21) Application number: 08161614.6
(22) Date of filing: 01.08.2008
(51) Int. Cl.: C08K 5/3492

(54) **Polypropylene composition having low volatiles**
Polypropylenzusammensetzung mit geringem Anteil an flüchtigen Elementen
Composition de polypropylène faiblement volatile

(43) Date of publication of application: 17.02.2010
(73) Proprietor: Borealis AG, 1220 Vienna (AT)
(72) Inventor: Schininger, Renate, 4030, Linz (AT)
(74) Representative: Lux, Berthold

(56) References cited:
- EP-A- 0 367 396
- EP-A- 1 364 760
- US-A1- 2003 191 239
- US-A1- 2005 209 379
- "VDA 278 Thermodesorptionsanalyse organischer Emissionen zur Charakterisierung von nichtmetallischen Kfz-Werkstoffen" VDA STANDARD, VERBAND DER AUTOMOBILINDUSTRIE, vol. 278, 1 September 2002 (2002-09-01), pages 1-30, XP009109456

## Description

The invention relates to polypropylene compositions having a low content of volatile components. This is achieved by the use of specific substances, in particular certain hindered amine light stabilisers.

### Background of the invention

Polypropylene is the material of choice for many applications. For instance polypropylene is increasingly used for applications in the automotive interior. Said polypropylene compositions have - generally speaking - good processability and can be individually customized. However such materials must also provide long term stability against environmental influences, like oxidative degradation, in order to keep the specifically tailored properties of the polypropylene composition on the desired level. Accordingly, stabilisers are added to hinder the degradation of the polypropylene compositions. A specific class of stabilisers is added to achieve long term heat stability of the polypropylene compositions. Sulphur containing stabilisers and hindered amine light stabilisers are examples of this class of stabilisers.

A further requirement of polypropylene compositions used in automotive applications is a low level of odour, especially in the automotive interior and in particular in HVAC applications (heating, venting, air condition).

Still further requirements of polypropylene compositions used in automotive interior applications are low levels of volatiles and fogging.

Odour (or rather malodour) is measured organoleptically and is a measure of the intensity of the smell of a certain polymer under standardised conditions.

Volatiles and fogging are measures of the emissions of different hydrocarbon fractions of a polymer.

Standard methods for the measurement of odour, volatiles and fogging are listed in the experimental section.

Over the last years the standard requirements for odour, volatiles and fogging have been ever steadily tightened. Unfortunately, it is not possible to draw conclusions that e.g. a low level of odour would necessarily correspond with a low level of volatiles or a low fogging level.

It is recommended in the literature to use hindered amine light stabiliser instead of sulphur containing long term heat stabilisers in order to reduce odour in polypropylene compositions containing carbon black or talc.

### Object

It is therefore the object of the present invention to provide a way to produce polypropylene compositions having good long term heat stability, acceptable odour and low emissions of organic carbons. In particular, the odour and long term heat stability shall be not worse than for polypropylene compositions containing sulphur containing heat stabilisers, in particular di-stearyl-thio-di-propionate.

The aforementioned object could be achieved with the use of a compound of formula (I) 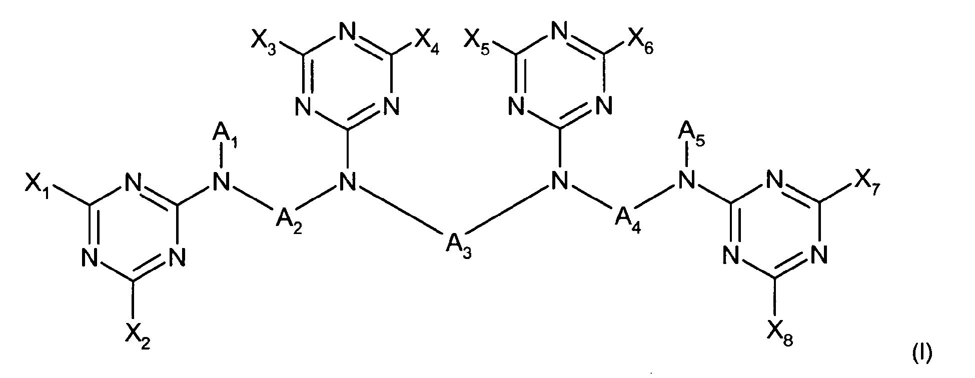 wherein A₁ and A₅ are independently from each other hydrogen or C₁-C₁₂-alkyl,
A₂, A₃ and A₄ are independently from each other C₂-C₁₀-alkyl,
X₁, X₂, X₃, X₄, X₅, X₆, X₇ and X₈ are independently from each other a group of formula (II) 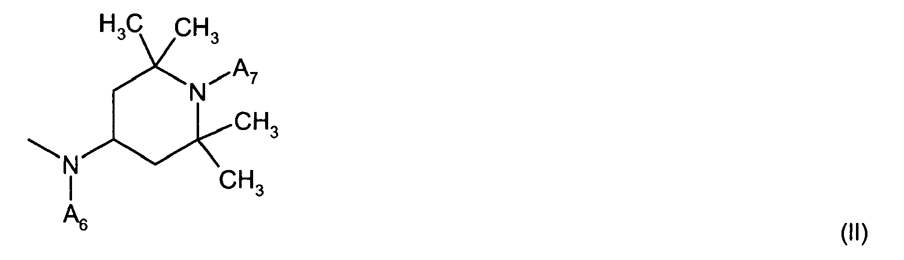 wherein
A₆ is hydrogen, C₁-C₁₂-alkyl, C₅-C₁₂-cycloalkyl, C₁-C₄-substituted C₅-C₁₂-cycloalkyl, phenyl, phenyl substituted by -OH and/or C₁-C₁₀-alkyl, C₇-C₉-phenylalkyl or C₇-C₉-phenylalkyl substituted on the phenyl residue with -OH and/or C₁-C₁₀-alkyl
and wherein A₇ is hydrogen, C₁-C₈-alkyl, =O, -OH, -CH₂CN, C₁-C₁₈-alkoxy, C₅-C₁₂-cycloalkoxy, C₃-C₆-alkenyl, C₇-C₉-phenylalkyl or C₇-C₉-phenylalkyl substituted on the phenyl residue with 1-3 C₁-C₄-alkyl residues, or C₁-C₈-acyl

for producing polypropylene compositions having a FOG value according to VDA 278, which is lower than the FOG value of the polypropylene composition which does not contain a compound of formula (I)but which contains the sulphur containing stabiliser di-stearyl-thio-di-propionate.

The word "alkyl" as used herein may denote an alkyl group having one or two free valences, e.g. methyl and 1-pentyl as examples for one valence or methylene, ethylene and 1,5-pentanediyl as examples for two valences.

It was surprisingly possible to achieve low FOG values when using compounds of formula (I). The compounds of formula (I) are also contributing to the long term heat stability of the polypropylene compositions.

It was surprisingly also possible to achieve low VOC values, which are also determined according to VDA 278. Also the VOC values which are achieved by using a compound of formula (I) are lower than the VOC values of the polypropylene composition when it does not contain a compound of formula (I).

According to an embodiment of the present invention, a compound of formula (I) is used, wherein in A₁ und A₅ are independently from each other hydrogen and C₁-C₄-alkyl and
A₂, A₃ and A₄ are independently from each other C₂-C₆-alkyl, and
A₆ is hydrogen, C₁-C₆-alkyl, C₅-C₇-cycloalkyl, phenyl or C₁-C₄-alkylphenyl and
A₇ is hydrogen, C₁-C₆-alkyl or C₇-C₉-phenylalkyl.

According to a further embodiment of the present invention, a compound of formula (I) is used, wherein A₁ und A₅ are independently from each other hydrogen and methyl and
A₂, A₃ and A₄ are independently from each other C₂-C₄-alkyl, and
A₆ is C₁-C₆-alkyl, C₅-C₇-cycloalkyl, phenyl or C₁-C₄-alkylphenyl and
A₇ is C₁-C₆-alkyl or C₇-C₉-phenylalkyl.

According to a further embodiment of the present invention, a compound of formula (I) is used, wherein X₁, X₂, X₃, X₄, X₅, X₆, X₇ and X₈ are equal and A₆ is n-butyl and A₇ is methyl. According to a further embodiment of the present invention, a compound of formula (I) is used, which is 1,3,5-Triazine-2,4,6-triamine, *N,N*"-[1,2-ethane-diyl-bis-[ [ [4,6-bis-[butyl (1,2,2,6,6-pentamethyl-4-piperidinyl)amino]-1,3,5-triazine-2-yl] imino]-3,1propanediyl]]-bis-[*N'*,*N"-*dibutyl-*N*',*N*"-bis-(1,2,2,6,6-pentamethyl-4-piperidinyl)]- (CAS 106990-43-6).

This compound is commercially available from many suppliers e.g. as CHIMASSORB ® 119 FL from Ciba Specialty Chemicals or as SUNSORB LS-119 from Sin Hun Chemical Corporation or as SONGLIGHT ® 1190 from Songwon International AG.

It is particularly preferred that the polypropylene composition of the present invention does not contain any sulphur containing stabilisers.

Usually, sulphur containing stabilisers are used to achieve long term heat stability of polypropylene compositions. In some cases, e.g. when the polypropylene composition comprises talc and/or carbon black, the use of sulphur containing stabilisers as long term heat stabiliser results in odour problems of the polypropylene composition. In such cases, hindered amine light stabilisers are used to achieve the desired long term heat stability without causing odour problems.

According to this preferred embodiment, a compound according to formula (I) is used in a polypropylene composition which does not contain any sulphur containing stabiliser, to achieve a low FOG value. It is still further preferred that the compound according to formula (I) is used irrespective of whether the polypropylene composition contains talc and/or carbon black.

According to a further preferred embodiment, the polypropylene composition is free of the sulfur containing stabilisers pentaerythritol-tetrakis-(3-laurylthiopropionate), bis[2-methyl-4-(3-n-dodecylthiopropionyloxy)-5-tert-butylphenyl] sulfide, di-octadecyl-disulphide, di-myristyl-thio-di-propionate, di-tridecyl-thio-di-propionate, di-lauryl-thio-di-propionate, di-stearyl-thio-di-propionate and mixtures thereof.

There is no limitation as to the types of polypropylene, which can be used for the present invention. Accordingly, that the polypropylene composition comprises polypropylene which is selected from the list consisting of propylene homopolymers, propylene random copolymers and heterophasic propylene copolymers. In case of copolymers, the preferred comonomers are ethylene, C₄-C₁₀-α-olefins and mixtures thereof.

The polypropylene in accordance with the present invention typically has an MFR of from 0.05 to 1000 g/10 min at 230 °C/2.16 kg. Depending on the desired end use, the MFR may preferably be in the range of from 0.1 to 5 g/10 min and in embodiments the present invention contemplates MFR values of from 0.1 to 1 g/10 min, in particular for use in pipe applications or MFR values of from 2 to 50 g/10 min for the preparation of articles prepared by molding operations. Higher MFR values, e.g. MFR values of >100 g/10 min are preferred for fiber applications.

The polypropylene in accordance with the present invention may be prepared by using conventional catalysts, including Ziegler-Natta catalysts and single site catalysts (including metallocenes), which may be supported catalysts. Typical Ziegler-Natta catalysts are disclosed in e.g. WO 03/042260, with respect to the description of catalyst components and polymerisation conditions.

### Preparation of polypropylenes

### Production of propylene homopolymer and of propylene random copolymer

The polymerisation process for the production of the random propylene copolymers according to the invention may be a continuous process or a batch process utilising known methods and operating in liquid phase, optionally in the presence of an inert diluent, or in gas phase or by mixed liquid-gas techniques.

Accordingly, the random propylene copolymer may be produced by single- or multistage process polymerisation of propylene and α-olefin and/or ethylene such as bulk polymerisation, gas phase polymerisation, slurry polymerisation, solution polymerisation or combinations thereof using conventional catalysts. Preferably, the copolymer is made either in one or two loop reactor(s) or in a combination of loop and gas phase reactor. Those processes are well known to one skilled in the art.

The process is preferably carried out in the presence of a catalyst system which is stereospecific for polymerising isotactic polypropylene.

A suitable catalyst for the polymerisation of the propylene polymer is any stereospecific catalyst for propylene polymerisation which is capable of polymerising and copolymerising propylene and α-olefin-comonomers at a temperature of 40 to 110°C and at a pressure from 10 to 100 bar. Ziegler Natta catalysts as well as metallocene catalysts are suitable catalysts. One skilled in the art is aware of the various possibilities to produce propylene homo- and copolymers and will simply find out a suitable procedure to produce suitable polymers which are used in the present invention, see e.g. Nello Pasquini (Ed.) Polypropylene Handbook, Hanser, Munich, 2005, pages 15 - 141.

The precise control of the polymerisation conditions and reaction parameters is within the state of the art. After the polymerisation in the first and the optional second reactor is finished, the polymer product is recovered by conventional procedures.

The resulting polymer particles may be pelletised in a conventional compounding extruder with various additives, which are generally used in thermoplastic polymer compositions, such as stabilisers, antioxidants, acid neutralising agents, ultraviolet absorbers, antistatic agents, etc.

Production of propylene homopolymer may be performed in an analogous manner, with the exception, that no comonomer (ethylene) is used in the polymerisation.

### Heterophasic propylene copolymer

A heterophasic copolymer may be produced by multistage process polymerisation of propylene and ethylene and/or an α-olefin such as bulk polymerisation, gas phase polymerisation, slurry polymerisation, solution polymerisation or combinations thereof using conventional catalysts. Those processes are also well known to one skilled in the art.

A preferred process is a combination of a bulk slurry loop reactor(s) and gas phase reactor(s). A matrix polymer can be made either in loop reactors or in a combination of loop and gas phase reactor.

The polymer produced in this way is transferred into another reactor and the disperse phase, an ethylene/α-olefin rubber, is polymerised. Preferably this polymerisation step is done in a gas phase polymerisation.

A suitable catalyst for the polymerisation of a heterophasic propylene copolymer is any stereospecific catalyst for propylene polymerisation which is capable of polymerising and copolymerising propylene and comonomers at a temperature of 40 to 110 °C and at a pressure form 10 to 100 bar. Ziegler Natta catalysts as well as metallocene catalysts are suitable catalysts.

One skilled in the art is aware of the various possibilities to produce such heterophasic systems and will simply find out a suitable procedure to produce suitable heterophasic copolymers which can be used in the present invention.

A heterophasic polyolefin composition may also be produced by mixing and melt blending a propylene homopolymer with an ethylene/α-olefin rubber.

It has been found, that the use of a compound of formula (I) to achieve a low FOG value is most effective, when the polypropylene composition is free of glass fibers.

The polypropylene compositions which are used for the invention may contain various additives, which are generally used in polypropylene compositions, such as further stabilizers and antioxidants, acid neutralizing agents, lubricants, ultraviolet absorbers, pigments, provided that they do not adversely affect the desired properties of the composition.

The polypropylene compositions of the present invention are suitable for a wide range of applications.

They are particularly suitable for the production of moulded articles, in particular for the production of injection moulded articles. Preferred examples of such injection moulded articles are large parts for interior applications in the automotive industry, in particular dashboards, centre consoles, claddings, etc.

### Compounding

The polypropylene, compound of formula (I) and optional further additives can be mixed, in particular melt blended, according to any conventional procedure known in the art.

The polypropylene compositions of the present invention are preferably produced by combining the polypropylene and compound of formula (I) and optional further additives, like pigments, stabilisers, processing aids, etc. in a melt mixing device.

Melt mixing devices suited for this process are discontinuous and continuous kneaders, twin screw extruders and single screw extruders with special mixing sections and co-kneaders. The residence time must be chosen such that a sufficiently high degree of homogenisation is achieved.

### Measurement methods

### MFR

The melt flow rates were measured with a load of 2.16 kg at 230 °C for polypropylene and the inventive polypropylene compositions of the examples. The melt flow rate that quantity of polymer in grams which the test apparatus standardised to ISO 1133 extrudes within 10 minutes at a temperature of 230 °C under a load of 2.16 kg.

### Odour

Odour was determined according to VDA 270:1992 on injection moulded plaques (150 x 80 x 2 mm³)_{.}

### Total Volatiles

The Total Volatiles value is determined according to VDA 277:1995 from pellets.

The Total Volatiles value is the total emission of organic carbon, determined according to the method in VDA 277. This value represents the amount of organic compounds which are emitted by a test sample which compounds can be found in the interior of a car.

Total Volatiles according to VDA 277, VOC and FOG according to VDA 278 are determined with different values. When one value is known, it is not possible to draw conclusions about the other values.

### VOC

VOC was determined according to VDA 278:2002 from pellets.

VOC according to VDA 278 is the sum of all high and medium volatile compounds. It is calculated as toluene equivalent (TE). VOC according to VDA 278 represents all organic compounds in the boiling point and elution range of up to C₂₀ (n-eicosane).

### FOG

FOG was determined according to VDA 278:2002 from pellets.

FOG according to VDA 278 is the sum of all organic compounds of low volatility, which have an elution time greater than or equal to n-hexadecane. FOG is calculated as hexadecane equivalent (HE). FOG according to VDA 278 represents organic compounds in the boiling point range of n-alkanes C₁₆ to C₃₂.

VDA standards are issued by "Verband der Automobilindustrie". The VDA standards used herein are available from "Dokumentation Kraftfahrwesen (DKF); Ulrichstrasse 14, D-74321 Bietigheim-Bissingen, Germany or can be downloaded from their website (www.dkf-ev.de).

### Examples

The following polypropylene was used:
PP : Propylene homopolymer having an MFR of 8 g/10 min. PP further contains 0.04 wt% of calcium stearate and 0.1 wt% of antioxidant (Pentaerythrityl-tetrakis(3-(3',5'-di-tert. butyl-4-hydroxyphenyl)-propionate and Tris (2,4-di-*t*-butylphenyl) phosphite in 1:2 ratio).

The polymers were mixed with their respective amounts of additives in an intensive mixer (Henschel mixer) for 25 seconds. The compositions were compounded in a twin screw extruder at a temperature of 250 °C. The strands were quenched in cold water and pelletised.

The compositions are shown in detail in table 1.

**Table 1**

| | | Inventive | Comparative |
|---|---|---|---|
| | | | |
| PP | wt% | 98 | 98 |
| 3114 | wt% | 0.15 | 0.15 |
| 168 | wt% | 0.15 | 0.15 |
| HALS | wt% | 0.30 | - |
| DSTDP | wt% | - | 0.40 |

- 3114: 1,3,5-Tris(3',5'-di-tert. butyl-4'-hydroxybenzyl)-isocyanurate
- 168: Tris(2,4-di-*t*-butylphenyl) phosphite
- HALS: 1,3,5-Triazine-2,4,6-triamine, *N,N*"'-[1,2-ethane-diyl-bis-[ [ [4,6-bis-[butyl (1,2,2,6,6-pentamethyl-4-piperidinyl)amino]-1,3,5-triazine-2-yl] imino]-3,1- propanediyl]]-bis-[*N*',*N*"-dibutyl-*N*',*N*''-bis-(1,2,2,6,6-pentamethyl-4-piperidinyl)] (CAS 106990-43-6)
- DSTDP:: Di-stearyl-thio-di-propionate

Injection moulded plaques (150 x 80 x 2 mm³) were prepared from the compositions of the examples. The samples (pellets and plaques) were stored at room temperature, but not aerated, vented or similar.

The Odour, Total Volatiles, VOC and FOG properties as shown in table 2 were measured from the samples according to the measurement methods described above. The measurement results are shown in Table 2.

**Table 2**

| Parameter | Method | | Inventive | Comparative |
|---|---|---|---|---|
| Odour | VDA 270 | - | 3 | 3 |
| Total Volatiles | VDA 277 | µgC/g | 51 | 50 |
| VOC | VDA 278 | µgTE/g | 119 | 136 |
| FOG | VDA 278 | µgHD/g | 341 | 442 |

## Claims

1. Use of a compound of formula (I) 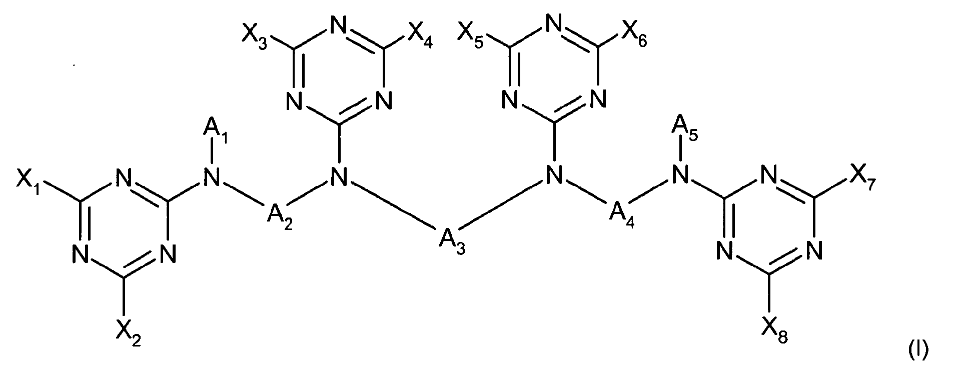 wherein A₁ and A₅ are independently from each other hydrogen or C₁-C₁₂-alkyl,
A₂, A₃ and A₄ are independently from each other C₂-C₁₀-alkyl,
X₁, X₂, X₃, X₄, X₅, X₆, X₇ and X₈ are independently from each other a group of formula (II) 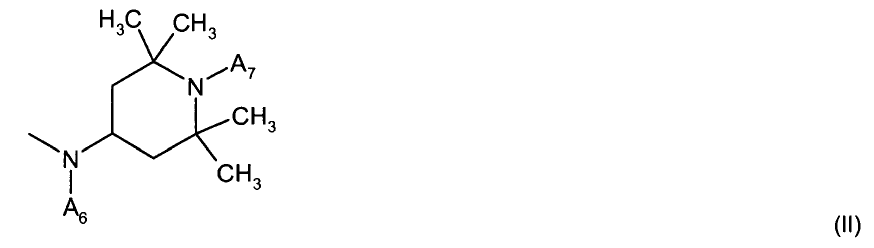 wherein
A₆ is hydrogen, C₁-C₁₂-alkyl, C₅-C₁₂-cycloalkyl, C₁-C₄-substituted C₅-C₁₂-cycloalkyl, phenyl, phenyl substituted by -OH and/or C₁-C₁₀-alkyl, C₇-C₉-phenylalkyl or C₇-C₉-phenylalkyl substituted on the phenyl residue with -OH and/or C₁-C₁₀-alkyl
and wherein A₇ is hydrogen, C₁-C₈-alkyl, =O, -OH, -CH₂CN, C₁-C₁₈-alkoxy, C₅-C₁₂-cycloalkoxy, C₃-C₆-alkenyl, C₇-C₉-phenylalkyl or C₇-C₉-phenylalkyl substituted on the phenyl residue with 1-3 C₁-C₄-alkyl residues, or C₁-C₈-acyl
for producing polypropylene compositions having a FOG value according to VDA 278, which is lower than the FOG value of the polypropylene composition which does not contain a compound of formula (I)but which contains the sulphur containing stabiliser di-stearyl-thio-di-propionate.

2. Use according to claim 1, **characterised in that** A₁ und A₅ are independently from each other hydrogen and C₁-C₄-alkyl and
A₂, A₃ and A₄ are independently from each other C₂-C₆-alkyl, and
A₆ is hydrogen, C₁-C₆-alkyl, C₅-C₇-cydoalkyl, phenyl or C₁-C₄-alkylphenyl and
A₇ is hydrogen, C₁-C₆-alkyl or C₇-C₉-phenylalkyl.

3. Use according to any one of the preceding claims, **characterized in that**
A₁ und A₅ are independently from each other hydrogen and methyl and
A₂, A₃ and A₄ are independently from each other C₂-C₄-alkyl, and
A₆ is C₁-C₆-alkyl, C₅-C₇-cycloalkyl, phenyl or C₁-C₄-alkylphenyl and
A₇ is C₁-C₆-alkyl or C₇-C₉-phenylalkyl.

4. Use according to any one of the preceding claims, **characterised in that** X₁, X₂, X₃, X₄, X₅, X₆, X₇ and X₈ are equal and A₆ is n-butyl and A₇ is methyl.

5. Use according to any one of the preceding claims, **characterized in that** the compound of formula (I) is
1,3,5-Triazine-2,4,6-triamine, *N,N*"'-[1,2-ethane-diyl-bis-[ [ [4,6-bis-[butyl (1,2,2,6,6-pentamethyl-4-piperidinyl)amino]-1,3,5-triazine-2-yl] imino]-3,1-propanediyl]]-bis-[*N*',*N*"-dibutyl-*N',N*"-bis-(1,2,2,6,6-pentamethyl-4-piperidinyl)] (CAS 106990-43-6).

6. Use according to any one of the preceding claims, **characterised in that** the polypropylene composition is free of sulphur containing stabilisers.

7. Use according to claim 6, **characterised in that** the polypropylene composition is free of pentaerythritol-tetrakis-(3-laurylthiopropionate), bis[2-methyl-4-(3-n-dodecylthiopropionyloxy)-5-tert-butylphenyl] sulfide, di-octadecyl-disulphide, di-myristyl-thio-di-propionate, di-tridecyl-thio-di-propionate, di-lauryl-thio-di-propionate, di-stearyl-thio-di-propionate and mixtures thereof.

## Patentansprüche

1. Verwendung einer Verbindung der Formel (I) 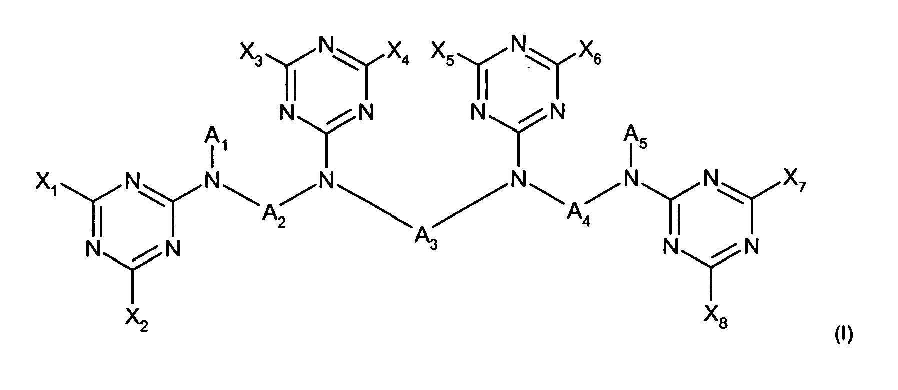 worin
A₁ und A₅ unabhängig voneinander Wasserstoff oder C₁-C₁₂-Alkyl sind,
A₂, A₃ und A₄ unabhängig voneinander C₂-C₁₀-Alkyl sind,
X₁, X₂, X₃, X₄, X₅, X₆, X₇ und X₈ unabhängig voneinander eine Gruppe der Formel (II) sind 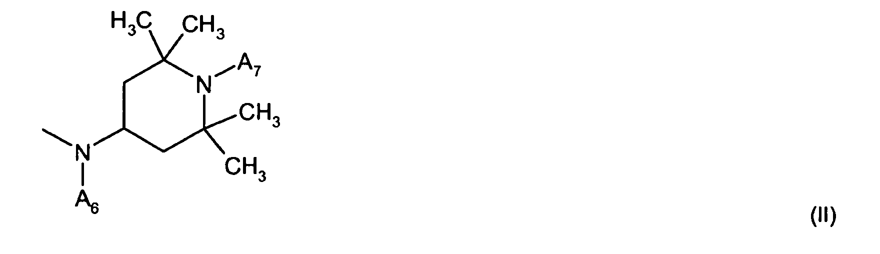 worin
A₅ Wasserstoff, C₁-C₁₂-Alkyl, C₅-C₁₂-Cycloalkyl, C₁-C₄ substituiertes C₅-C₁₂-Cycloalkyl, Phenyl, Phenyl substituiert mit -OH und /oder C₁-C₁₀-Alkyl, C₇-C₉-Phenylalkyl oder C₇-C₉-Phenylalkyl am Phenylrest substituiert mit -OH und /oder C₁-C₁₀-Alkyl
und worin A₇ Wasserstoff , C₁-C₈-Alkyl, =O, -OH, -CH₂CN, C₁-C₁₈-Alkoxy, C₅-C₁₂-Cycloalkoxy, C₃-C₆-Alkenyl, C₇-C₉-Phenylalkyl oder C₇-C₉-Phenylalkyl am Phenylrest substituiert mit 1-3 C₁-C₄-Alkylresten, oder C₁-C₈-Acyl ist zur Herstellung von Polypropylen-Zusammensetzungen mit einem FOG Wert gemäß VDA 278, der niedriger ist als der FOG Wert der Polypropylen-Zusammensetzung, welche keine Verbindung der Formel (I), aber den schwefelhaltigen Stabilisator Di-stearyl-thio-di-propionat enthält.

2. Verwendung gemäß Anspruch 1, **dadurch gekennzeichnet, dass** A₁ und A₅ unabhängig voneinander Wasserstoff und C₁-C₄-Alkyl sind und
A₂, A₃ und A₄ unabhängig voneinander C₂-C₆-Alkyl sind, und
A₆ Wasserstoff, C₁-C₆-Alkyl, C₅-C₇-Cycloalkyl, Phenyl oder C₁-C₄-Alkylphenyl ist und
A₇ Wasserstoff, C₁-C₆-Alkyl oder C₇-C₉-Phenylalkyl ist.

3. Verwendung gemäß irgendeinem der vorherigen Ansprüche, **dadurch gekennzeichnet, dass**
A₁ und A₅ unabhängig voneinander Wasserstoff und Methyl sind und
A₂, A₃ und A₄ unabhängig voneinander C₂-C₄-Alkyl sind, und
A₆ C₁-C₆-Alkyl, C₅-C₇-Cycloalkyl, Phenyl oder C₁-C₄-Alkylphenyl ist und
A₇ C₁-C₆-Alkyl oder C₇-C₉-Phenylalkyl ist.

4. Verwendung gemäß irgendeinem der vorherigen Ansprüche, **gekennzeichnet dadurch, dass** X₁, X₂, X₃, X₄, X₅, X₆, X₇ und X₈ gleich sind und A₆ n-Butyl ist und A₇ Methyl ist.

5. Verwendung gemäß irgendeinem der vorherigen Ansprüche, **dadurch gekennzeichnet, dass** die Verbindung der Formel (I) 1,3,5-Triazin-2,4,6-triamin, N,N"`-[1,2-Ethandiyl-bis-[[[4,6-bis-[butyl(1,2,2,6,6-pentmethyl-4-piperidinyl)amino]-1,3,5-triazin-2-yl]imino]-3,1-propandiyl]]-bis-[N',N"-dibutyl-N',N"-bis-(1,2,2,6,6-pentamethyl-4-piperidinyl)] (CAS 106990-43-6) ist.

6. Verwendung gemäß irgendeinem der vorherigen Ansprüche, **gekennzeichnet dadurch, dass** die Polypropylen-Zusammensetzung frei von schwefelhaltigen Stabilisatoren ist.

7. Verwendung gemäß Anspruch 6, **gekennzeichnet dadurch, dass** die Polypropylen-Zusammensetzung frei von Pentaerythritol-tetrakis-(3-laurylthiopropionat), Bis[2-methyl-4-(3-n-dodecylthiopropionyloxy)-5-tert-butylphenyl]sulfid, Di-octadecyldisufid, Di-myristyl-thio-di-propionat, Di-tridecyl-thio-di-propionat, Di-lauryl-thio-di-propionat, Di-stearyl-thio-di-propionat und Mischungen davon ist.

## Revendications

1. Utilisation d'un composé de formule (I) 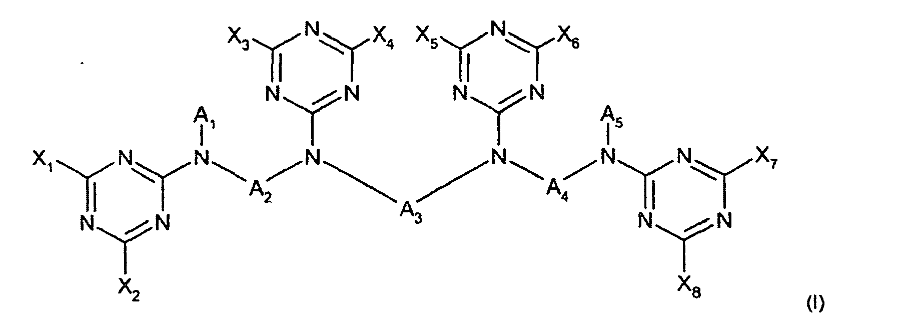 dans laquelle A₁ et A₅ sont indépendamment l'un de l'autre l'hydrogène ou un groupe alkyle en C₁-C₁₂, A₂, A₃ et A₄ sont indépendamment les uns des autres un groupe alkyle en C₂-C₁₀,
X₁, X₂, X₃, X₄, X₅, X₆, X₇ et X₈ sont indépendamment les uns des autres un groupe de formule (II) 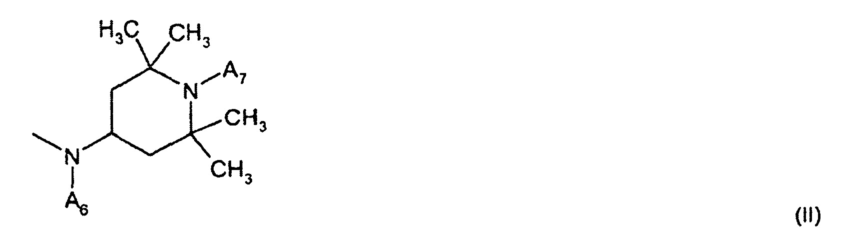 dans laquelle
A₆ est l'hydrogène, un groupe alkyle en C₁-C₁₂, cycloalkyle en C₅-C₁₂, cycloalkyle en C₅-C₁₂ substitué en C₁-C₄, phényle, phényle substitué par -OH et/ou un groupe alkyle en C₁-C₁₀, phénylalkyle en C₇-C₉ ou phénylalkyle en C₇-C₉ substitué sur le résidu phényle par -OH et/ou un groupe alkyle en C₁-C₁₀,
et dans laquelle A₇ est l'hydrogène, un groupe alkyle en C₁-C₈, =O, -OH, -CH₂CN, alcoxy en C₁-C₁₈, cycloalcoxy en C₅-C₁₂, alcényle en C₃-C₆, phénylalkyle en C₇-C₉ ou phénylalkyle en C₇-C₉ substitué sur le résidu phényle par 1-3 résidus alkyle en C₁-C₄, ou acyle en C₁-C₈ pour produire des compositions de polypropylène présentant une valeur de voile (FOG) selon VDA278 qui est inférieure à la valeur de voile (FOG) de la composition de polypropylène qui ne contient pas de composé de formule (I) mais qui contient le stabilisant contenant du soufre di-stéaryl-thio-di-propionate.

2. Utilisation selon la revendication 1, **caractérisée en ce que** A₁ et A₅ sont indépendamment l'un de l'autre l'hydrogène et un groupe alkyle en C₁-C₄, et
A₂, A₃ et A₄ sont indépendamment les uns des autres un groupe alkyle en C₂-C₆, et
A₆ est l'hydrogène, un groupe alkyle en C₁-C₆, cycloalkyle en C₅-C₇, phényle ou alkylphényle en C₁-C₄, et
A₇ est l'hydrogène, un groupe alkyle en C₁-C₆ ou phénylalkyle en C₇-C₉.

3. Utilisation selon l'une quelconque des revendications précédentes, **caractérisée en ce que**
A₁ et A₅ sont indépendamment l'un de l'autre l'hydrogène et un groupe méthyle, et
A₂, A₃ et A₄ sont indépendamment les uns des autres un groupe alkyle en C₂-C₄, et
A₆ est un groupe alkyle en C₁-C₆, cycloalkyle en C₅-C₇, phényle ou alkylphényle en C₁-C₄, et
A₇ est un groupe alkyle en C₁-C₆ ou phénylalkyle en C₇-C₉.

4. Utilisation selon l'une quelconque des revendications précédentes, **caractérisée en ce que** X₁, X₂, X₃, X₄, X₅, X₆, X₇ et X₈ sont égaux et A₆ est le n-butyle et A₇ est le méthyle.

5. Utilisation selon l'une quelconque des revendications précédentes, **caractérisée en ce que** le composé de formule (I) est la 1,3,5-triazine-2,4,6-triamine, N,N"-[1,2-éthane-diyl-bis[[[4,6-bis-[butyl (1,2,2,6,6-pentaméthyl-4-pipéridinyl)amino]-1,3,5-triazin-2-yl]imino]-3,1-propanediyl]]-bis-[N',N"-dibutyl-N',N"-bis-(1,2,2,6,6-pentaméthyl-4-pipéridinyle)] (CAS 106990-43-6).

6. Utilisation selon l'une quelconque des revendications précédentes, **caractérisée en ce que** la composition de polypropylène est exempte de stabilisants contenant du soufre.

7. Utilisation selon la revendication 6, **caractérisée en ce que** la composition de polypropylène est exempte de pentaérythritol-tétrakis-(3-laurylthiopropionate), de bis[2-méthyl-4-(3-n-dodécylthiopropionyloxy)-5-tert-butylphényl]sulfure, de di-octadécyl-disulfure, de di-myristyl-thio-di-propionate, de di-tridécyl-thio-di-propionate, de di-lauryl-thio-di-propionate, de di-stéaryl-thio-di-propionate et de mélanges de ceux-ci.
